# EUROPÄISCHE PATENTSCHRIFT

(11) **EP 1 096 176 B1**
(45) Veröffentlichungstag und Bekanntmachung des Hinweises auf die Patenterteilung: **18.01.2006**
(21) Anmeldenummer: 00122661.2
(22) Anmeldetag: 18.10.2000
(51) Int. Cl.: F16H 55/50

(54) **Seilantriebselement zum Antreiben von Kunstfaserseilen**
Cable drive for driving synthetic fibre cables
Système d'entraînement de câble pour entraîner des câbles en fibres synthétiques

(30) Priorität: 29.10.1999 EP 99810978
(43) Veröffentlichungstag der Anmeldung: 02.05.2001
(73) Patentinhaber: INVENTIO AG, CH-6052 Hergiswil (CH)
(72) Erfinder: De Angeles, Claudio, Dipl-Ing., 6004 Luzern (CH)

(56) Entgegenhaltungen:
- EP-A- 0 423 370
- WO-A-98/16681
- DE-A- 1 575 574
- DE-A- 1 900 707
- DE-U- 8 608 764
- JP-A- 61 169 479
- US-A- 4 591 025
- "Deutsche Normen DIN 15061 Teil 1 und Teil 2" August 1977 (1977-08) , BEUTH VERLAG , BERLIN 30 UND KÖLN XP000892874 * das ganze Dokument *
- KLEIN: "Einführung in die DIN-normen" 1961 , B.G.TEUBNER VERLAGSGESELLSCHAFT , STUTTGART XP002132610 * Seite 368 * * Seite 370 * * Seite 388 * * Seite 129 *
- SBM: "Oppervlakteruwheid" SELECTIE VAN BELGISCHE NORMEN BOEKDEELTJE 1 MECHANICA, BASISNORMEN, April 1977 (1977-04), Seite 45 XP002132609 Brussel, België
- PATENT ABSTRACTS OF JAPAN vol. 003, no. 126 (M-077), 20. Oktober 1979 (1979-10-20) & JP 54 104145 A (HITACHI LTD), 16. August 1979 (1979-08-16)
- PATENT ABSTRACTS OF JAPAN vol. 1998, no. 03, 27. Februar 1998 (1998-02-27) & JP 09 290983 A (HITACHI LTD;HITACHI BUILDING SYST CO LTD), 11. November 1997 (1997-11-11)
- "TECHNISCHES ZEICHEN", H. HOISCHEN, GIRADET, ESSEN 1984 * Seite 76 - Seite 81 *

## Beschreibung

Die Erfindung betrifft ein Seilantriebselement zum Antreiben von Kunstfaserseilen, vorzugsweise für einen Seilantrieb einer Aufzugsanlage, mit den im Oberbegriff der unabhängigen Patentansprüche 1 bzw. 9 angegebenen Merkmalen, welche aus der WO-A-9816681 bekannt geworden sind.

Seilantriebe dieser Art werden in der Fördertechnik, insbesondere im Kranbau, Bergbau und im Aufzugsbau oder bei Seilbahnen und dergleichen verwendet. Die Funktion solcher Seilantriebe beruht bekanntlich darauf, dass die Antriebskraft über den jeweils mit dem Seilantriebselement, z.B. der Treibscheibe, Seiltrommel oder dergleichen, in Kontakt stehenden Abschnitt dem Seil aufgeprägt wird. Das Seil wird beim Lauf über die Treibscheibe gebogen, was zu Ausgleichsbewegungen der Litzen eines mehrlagigen Seiles führt.

Die Treibfähigkeit solcher Traktionssysteme ist auf Betriebsbereiche mit ausreichendem Reibschluss zwischen Treibscheibe und Seil beschränkt. Zum Beispiel ist bei einem Seilaufzug mindestens die Gewichtsdifferenz von Gegengewicht und Kabine von der Reibkraft auf der Treibscheibe auszugleichen. Zusätzlich ist das Drehmoment von der Treibscheibe unter Reibschluss auf das Seil zu übertragen. Demzufolge werden Seiltriebe so ausgelegt, dass für die verschiedenen Fördersituationen, z.B. normaler Fahrvorgang, Notstop, Be- und Entladen, immer genügend Traktionsfähigkeit vorhanden ist. Begrenzt wird der Reibschlussbereich im wesentlichen durch einen minimalen und einen maximalen sogenannten zulässigen Systemreibwert zwischen Treibscheibe und dem darüber geführten Seil.

Um den passenden Reibwert auf der Treibscheibe aufzubauen, werden bei herkömmlichen Treibscheiben Formrillen, z. B-Keilrillen oder Sitzrillen mit Unterschnitt, eingestochen, die mittels ihrer Formgebung auf Stahlseile eine spezifische Pressung ausüben, so dass das Seil mehr oder weniger geklemmt wird. Diese Treibscheibenrillen können aber für vollsynthetische Tragseile nicht verwendet werden. Bei diesen Kunstfaserseilen, wie bspw. in WO98/16681A1 offenbart, lässt sich der gewünschte Reibwert jeweils durch das verwendete Material, wie z.B. Polyurethan; Polyamid dergleichen und dessen Härte sehr gut einstellen. Allerdings könnten herstellungsbedingte Abweichungen der Reibwerte oder aber unvorhersehbare Reduzierungen der Systemreibwerte durch Öl, Schmiermittel oder andere Flüssigkeiten die Traktionsfähigkeit nachhaltig beeinträchtigen. Unter ungünstigsten Umständen kann daher nicht ausgeschlossen werden, dass sich das Seil bewegt, ohne dass der Antrieb auf diese Bewegungen Einfluss nehmen könnte. Dies könnte zu Personen- bzw. Sachschäden führen.

Ziel der Erfindung ist es daher, ein Traktionssystem für Kunstfaserseile anzugeben, welches weitgehend unabhängig von Umgebungseinflüssen eine gleichbleibend gute Treibfähigkeit sicherstellt.

Dieses Ziel wird erfindungsgemäss durch ein Traktionssystem mit den in den unabhängigen Patentansprüchen angegebenen Merkmalen erreicht. Die abhängigen Ansprüche enthalten zweckmässige und vorteilhafte Weiterbildungen und/ oder Ausführungen der durch den Patentanspruch 1 bzw. 9 gegebenen Erfindung.

Bei dem erfindungsgemässen Traktionssystem ist die Streuung der Systemreibwerte der Paarung Seiloberfläche und Lauffläche des Seilantriebelements, wie z.B. einer Seil- oder Treibscheibe, einer Seiltrommel, einem umgelenkten Antriebsgurt oder dergleichen, wesentlich kleiner. Versuche der Anmelderin haben bei einer Seillauffläche mit erfindungsgemässer Oberfläche ergeben, dass sich der Systemreibwert im Betrieb bei Normalbedingungen erhöht und vorteilhafter Weise auf diesem höheren Niveau konstant bleibt, auch wenn Schmiermittel oder andere Flüssigkeiten hinzukommen.

Die Oberflächenrauhtiefe und/ oder die Körnungsgrösse der Beschichtung sind dabei an die Shore-Härte des Seilmantels oder des Mantels der Litzendecklage angepasst, so dass jede Verschleiss- bzw. Funktionsanforderung durch jeweils geeignete Kombination darstellbar ist. Zur Erhöhung der Lebensdauer des Seilmantels und zur Stabilisierung der Traktionsfähigkeit des Seilantriebs auf Dauer, ist für kleinere Rauhtiefen ein Reibpartner mit einer kleineren Shore-Härte vorgesehen, während für grössere Shore-Härten Seil- bzw. Litzendecklageumhüllungen mit härteren Kunststoffoberflächen eingesetzt werden.

Zur Erzielung der erfindungsgemässen Vorteile ist es ohne Bedeutung, ob das Kunstfaserseil auf einer Zylindermantelfläche des Seilantriebelements oder in einer Formrille, wie z. B. einer Halbrundrille läuft. Ebenso können verschiedenartige Ausgestaltungen von Seilrollenprofilen vorgesehen sein, wie z. B. eine Doppelhalbrundrille, in der ein komplementäres Doppel- bzw. Zwillingsseil läuft, usw.. Die mit der Erfindung erzielbaren Vorteile werden grundsätzlich auch unabhängig von der gewählten Form der Seillauffläche des Seilantriebelements erreicht.

Beim Lauf über eine Treibscheibe schmiegt sich das Kunstfaserseil an das Profil der Halbrundrille an und verformt sich unter Last auf der Auflagefläche, bzw. in der Profilrille, von seiner ursprünglich kreisrunden Form hin zu einem ovalen Querschnitt. Entsprechend der Verformung sind die Anpresskräfte des Seils in der Seilrille über den Querschnitt der Rille nicht konstant, sondern nehmen zum Rillengrund hin zu. Diese Verteilung der Anpresskräfte ist mit zunehmender Seillast stärker ausgeprägt.

In vorteilhafter bevorzugter Weiterbildung der Erfindung bei Ausführungsformen mit Formrillen ist ein Ausbilden der erfindungsgemässen Oberfläche über Teilbereiche einer Rille dazu verwendet, die über den Formrillenquerschnitt lastabhängige Anpressdruckverteilung zur Einstellung des Traktionsverhaltens des Seils und damit zur Erfüllung einer gewünschten Funktionsanforderung einzusetzen.

Ausgehend von einer Ausführungsform der erfindungsgemässen Treibscheibe mit Halbrund-Formrillen, ist bei einer Ausführung die erfindungsgemässe Oberfläche begrenzt auf den Rillengrund über einen Winkelbereich von beispielsweise 45° ausgebildet. Der Systemreibwert dieser Formrille ist folglich im Nutgrund hoch und nimmt zu beiden Seiten hin ab. Entsprechend ist das Traktionsverhalten eines in dieser Rille laufenden Kunstfaserseils im unbelasteten Seilzustand bewusst weniger ausgeprägt als bei grosser am Kunstfaserseil angreifender Last, wenn das Seil stärker in die Formrille gezogen wird und mit einem Anpresskraftmaximum im Rillengrund aufliegt.

Die erfindungsgemässe Oberfläche, der ein Mittenrauhwert von Ra = 1,6 bis 50 µm entspricht, kann entweder durch mechanische Nachbearbeitung, die zur Schaffung einer beständigen Oberflächenbeschaffenheit geeignet ist, wie z.B. durch Rändeln oder ähnlichem, dargestellt werden, oder aber durch eine Beschichtung der Oberfläche, vorzugsweise mit Korund-Plasma.

Eine Beschichtung der Seillaufflächenoberfläche bietet zudem die Möglichkeit, herkömmliche Treibscheiben oder Seiltrommeln nachträglich für das vorteilhafte Traktionsverhalten mit Kunstfaserseilen umzurüsten. Die Beschichtung kann entweder direkt an den gewünschten Bereichen auf die Stahlrille aufgebacht werden oder es werden zunächst entsprechend biegeelastische Steifen plasmabeschichtet und diese vorgefertigten Plasmastreifen/bänder dann an gewünschter Stelle der Seillauffläche aufgeklebt, aufgeschraubt und/ oder in anderer Weise darauf festgelegt werden.

In weitergehender. Weiterbildung der Erfindung ist das Traktionsverhalten einer Treibscheibe mit mehreren am Umfang ausgebildeten Formrillen durch Kombination der zuvor beschriebenen Ausführungen von Rillenoberflächen, den jeweils gewählten Anforderungen an das Traktionssystem gezielt angepasst.

Bevorzugte Ausführungsbeispiele der Erfindung sind in der Zeichnung dargestellt und im folgenden ausführlich beschrieben. Es zeigt:
- Figur 1,: eine schematische Ansicht einer erfindungsgemässen Seilscheibe in Richtung ihrer Drehachse und einem darübergeführten Kunstfaserlitzenseil;
- Figur 2,: eine Halbschnittansicht parallel zu Drehachse der erfindungsgemässen Treibscheibe aus Figur 1;
- Figur 3a,: schematisch im Teilschnitt die Seilrille eines ersten Ausführungsbeispiels einer erfindungsgemässen Treibscheibe;
- Figur 4a,: ein viertes Ausführungsbeispiel der Erfindung mit einer Doppelseilrille mit darin aufliegendem Zwillingsseil im Teilschnitt;
- Figur 4b,: im Teilschnitt ein fünftes Ausführungsbeispiel der erfindungsgemässen Treibscheibe mit Doppelrille;
- Figur 4c,: im Teilschnitt ein sechstes Ausführungsbeispiel der erfindungsgemässen Treibscheibe mit Doppelrille;
- Figur 4d,: im Teilschnitt die Doppelrille der erfindungsgemässe Treibscheibe aus Figur 4a;
- Figur 4e,: im Teilschnitt ein siebtes Ausführungsbeispiel der erfindungsgemässen Treibscheibe mit Doppelrille;
- Figur 4f,: im Teilschnitt ein achtes Ausführungsbeispiel der erfindungsgemässen Treibscheibe mit Doppelrille.

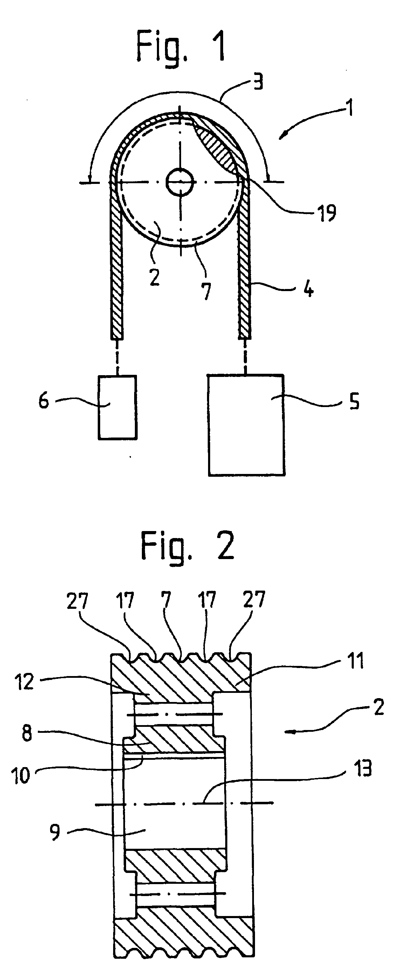

Figur 1 zeigt schematisch am Beispiel einer Aufzugsanlage einen Seilantrieb 1 zum Antreiben von fünf über eine Treibscheibe 2 geführten, jeweils über einen Umschlingungswinkel 3 von nahezu 180° auf dem Aussenumfang der Treibscheibe 2 aufliegenden Kunstfaserseilen 4. Die fünf Kunstfaserseile 4 dienen als angetriebene Förderseile zum Heben und Senken einer Aufzugskabine 5, welche jeweils mit einem Ende der Seile 4 verbunden ist, während jeweils das zweite Ende der fünf Kunstfaserseile 4 mit einem Gegengewicht 6 befestigt ist. Die fünf Kunstfaserseile 4 sind durch die Massenkräfte von Aufzugskabine 5 und Gegengewicht 6 beim Lauf über die Treibscheibe 2 permanent belastet. Das dargestellte Traktionssystem aus Treibscheibe 2 und darüber geführten fünf Kunstfaserseilen 4 ist erfindungsgemäss so ausgelegt, dass unter der Last von Kabine 5 und Gegengewicht 6 ausreichend Reibschluss zum Übertragen des Antriebsdrehmoments einer Antriebsmaschine mittels Treibscheibe 2 auf die Kunstfaserseile 5 sichergestellt ist.

Die Maximalbegrenzung des Reibwertes leitet sich bei einem Seilaufzug aus der sicherheitstechnischen Forderung ab, dass die Seile 4 beim Aufsetzen des Gegengewichtes 6 auf der Treibscheibe 2 rutschen. Damit wird sichergestellt, dass die Aufzugskabine 5 beim Überfahren der obersten Haltestelle trotz weitertreibender Treibscheibe 2 nicht unter die Schachtkopfdecke gezogen und die Tragseile 4 bis zur Bruchkraftgrenze belastet werden. Ein totales Seilversagen wäre die Folge. Andererseits darf ein minimaler Reibwert nicht unterschritten werden, damit die Gewichtsdifferenzen zwischen Kabine 5 und Gegengewicht 6 auf der Treibscheibe 2 durch die Reibkraftkomponente neutralisiert werden können.

Dazu sind im dargestellten Ausführungsbeispiel am Aussenumfang der Treibscheibe 2 Formrillen 7 17, 27 zur Führung der Kunstfaserseile 4 ausgebildet, welche im wesentlichen eine der Aussenkrümmung der Förderseile 4, d. h. dem aufliegenden Teilquerschnitt des Seils 4, entsprechende Rillenform aufweisen. Bei den in den Figuren 2 bis 3a gezeigten Ausführungsformen der Treibscheibe 2 sind die Seilrillen 7, 17, 27 als Halbrundrillen ausgebildet.

Figur 2 stellt einen Halbschnitt einer Ausführungsform der erfindungsgemässen Treibscheibe 2 dar. Die Treibscheibe 2 besitzt eine Nabe 8 mit einer zentrischen Durchgangsbohrung 9 zur Aufnahme einer Antriebswelle. Die Treibscheibe 2 sitzt passgenau auf der Antriebswelle auf und ist zur Übertragung des Antriebsmoments mittels Keilverbindung 10 auf dieser drehgesichert montiert. Eine im wesentlichen hohlzylinderförmige Felge 11 ist über einen gelochten Scheibenkörper 12 einstückig mit der Nabe 8 verbunden.

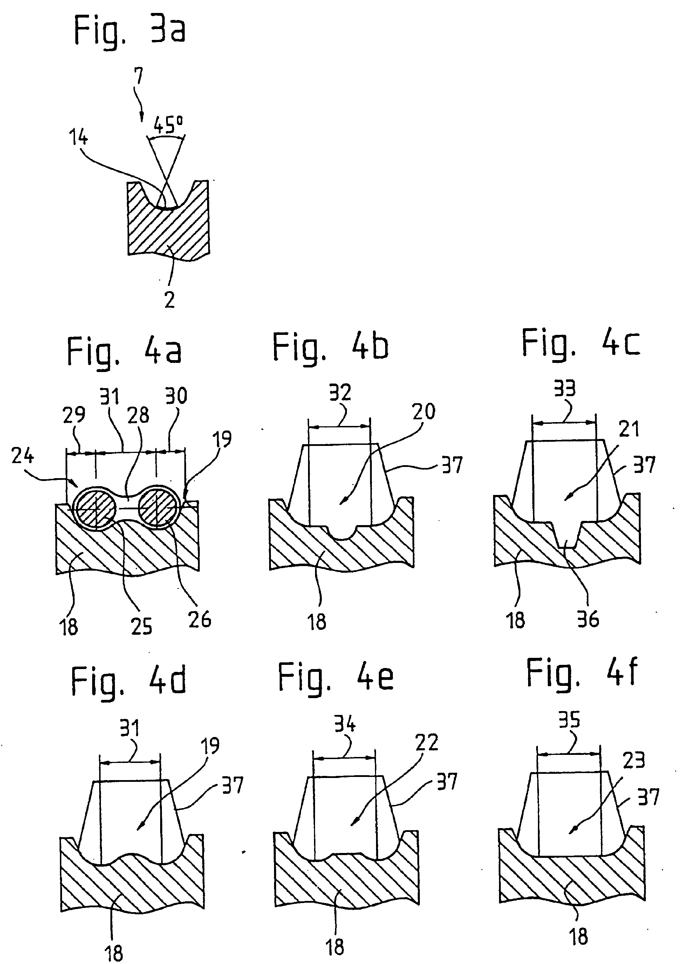

Auf der durch die Zylindermantelfläche der Felge 11 gebildeten Aussenumfangsfläche der Treibscheibe 2 sind in Achsrichtung der Treibscheibe 2 in regelmässigen Abständen zueinander fünf Seilrillen 7, 17, 27 eingestochen, die, wie nachfolgend genauer beschrieben, gemäss der Erfindung alle mit einer Plasmabeschichtung 14 versehen sind. Im Aufzugsbau üblich sind bisher Treibscheiben 2 mit zwei bis zwölf Rillen. Bei der hier anhand Figur 2 beschriebenen Ausführung sind fünf Rillen 7, 17, 27 mit Halbrund-Profil ausgebildet (Figur 3a). Möglich sind aber auch andere Rillenformen, die der Fachmann kennt und entsprechend den jeweils verwendeten Seilquerschnittsformen vorsehen kann, ohne dass sich dadurch das Wesen der Erfindung ändert. Beispiele hierzu sind in den Figuren 4a bis 4f gezeigt und weiter unten beschrieben.

Wie gewöhnlich ist der Seilantrieb 1 so ausgelegt, dass für die verschiedenen Fördersituationen, z.B. normaler Fahrvorgang, Notstop, Be- und Entladen, immer genügend Traktionsfähigkeit vorhanden ist. Um die notwendige bzw. eine maximale Traktions- oder Teibfähigkeit zu erzeugen, d.h. die Traktionsfähigkeit auch für die bekanntgewordenen vollsynthetischen Tragmittel in relativ engen Grenzen zu halten, sind bei der Ausführungsform nach Figur 2 die Rillenoberflächen der Treibscheibe 2 erfindungsgemäss teilweise oder ganz mit einer Plasmabeschichtung 14 versehen.

Eine teilweise Beschichtung einer Rille 7, 17, 27 mit Plasma dient dazu, diese zur Erfüllung einer gewünschten Funktionsanforderung an eine über den Formrillenquerschnitt lastabhängige Anpressdruckverteilung zur Einstellung des Traktionsverhaltens des Seils 4 einzusetzen.

Beim Lauf über die Treibscheibe 2 schmiegt sich das Kunstfaserseil 4 an das Profil der Halbrundrille 7, 17, 27 an und verformt sich unter Last auf der Auflagefläche, bzw. in der Profilrille, von seiner ursprünglich kreisrunden Form hin zu einem ovalen Querschnitt. Entsprechend der Verformung sind die Anpresskräfte des Seils 4 in der Seilrille 7, 17, 27 über den Querschnitt der Rille nicht konstant, sondern nehmen zum Rillengrund hin zu. Diese Verteilung der Anpresskräfte ist mit zunehmender Seillast stärker ausgeprägt.

Ausgehend von einer erfindungsgemässen Treibscheibe 2 mit Halbrund-Formrillen, ist bei der in Figur 3a gezeigten Seilrille 7 eine Plasmabeschichtung 14 begrenzt auf den Rillengrund über einen Winkelbereich von 45° ausgebildet. Die Rillengrundbeschichtung ist nicht auf den hier angegebenen Winkelbereich von 45° begrenzt; vielmehr kann hier zur Darstellung einer gewünschten Reibkraft der beschichtete Winkelbereich im Nutgrund entsprechend gewählt werden. Der Systemreibwert dieser Seilrille 7 ist folglich im Nutgrund hoch und nimmt zu beiden Seiten hin ab. Entsprechend ist das Traktionsverhalten eines in dieser Rille 7 laufenden Kunstfaserseils 4 im unbelasteten Seilzustand gezielt weniger ausgeprägt als bei grosser am Kunstfaserseil 4 angreifender Last, wenn das Seil 4 stärker in die Formrille 7 gezogen wird und sich in Folge der zuvor beschriebenen Seilverformung besonders eng an den Nutengrund anschmiegt und mit einem Anpresskraftmaximum im Rillengrund aufliegt.

Erfindungsgemäss kann durch gezielte Nebeneinanderordnung einzelner oder mehrerer der in oben beschriebener Weise unterschiedlich beschichteten Seilrillen 7, 17,27 auf einer Treibscheibe 2, das Traktionsverhalten eines Seilantriebs 1 gezielt auf geforderte Funktionenvorgaben abgestimmt werden.

Dank der erfindungsgemässen Oberflächenrauhigkeit, die hier durch eine Plasmabeschichtung 14 geschaffen ist, ist der Systemreibwert der Paarung Seiloberfläche und Lauffläche der Treibscheibe 2 im Normalzustand höher und bleibt auf diesem Niveau konstant, auch wenn Schmiermittel oder andere Flüssigkeiten hinzukommen.

Die mittels erfindungsgemässer Plasmabeschichtung 14 geschaffene Oberflächenbeschaffenheit der Seillaufflächen, hier der Seilrillen 7, 17, 27 besitzt Rauhigkeitstiefen und Körnungsgrössen, die je nach Verschleissanforderung bzw. Funktionsanforderung an die Shore-Härte des Seilmantels oder des Mantels der Litzendecklage aus Polyurethan; Polyamid oder dergleichen, angepasst sind. Dabei ist für kleinere Rauhtiefen (Ra-Werte) ein Reibpartner vorzusehen, der eine kleinere Shore-Härte hat. Analog sind für grössere Shore-Härten härtere Kunststoffoberflächen vorzusehen.

Die Oberflächenrauheit der Plasmabeschichtung 14 in Kombination mit vollsynthetischen Förderseilen 4 bewegt sich in einem Bereich der Güteklassen N7 bis N12, was einer mittleren Oberflächenrauhtiefe von Ra = 1,6 bis 50 µm entspricht. Bei der in den Figuren 1 bis 3 dargestellten Ausführungsform ist eine N9 Plasmabeschichtung 14 mit einer Kunstfaserseilummantelung der Härte A nach Shore kombiniert. Dagegen sollten Oberflächenrauhigkeiten N10 und grösser mit Seilumhüllungen grösserer Härte, wie z.B. Shore-Härte D, kombiniert werden.

In den Figuren 4a bis 4f sind Ausführungsbeispiele einer Seilscheibe 18 gemäss der Erfindung mit Doppelrillen 19, 20, 21, 22, 23 dargestellt, in denen, wie in Figur 4a beispielhaft gezeigt, ein sogenanntes Zwillingsseil 24 läuft. Das Zwillingsseil 24 ist symmetrisch aus zwei mit entgegengesetzten Drehrichtungen gedrehten mehrlagigen Kunstfaserlitzenseilen 25, 26 aufgebaut, die über einen gemeinsamen Seilmantel 28 miteinander zu dem drehungsneutralen Zwillingsseil 24 mit hantelförmigem Querschnitt zusammengefasst sind. Die Form der Doppelrille ist jeweils komplementär zur Kontur des Zwillingsseils 24 ausgebildet. Die Form der Doppelrillen 19, 20, 21, 22, 23 in Achsrichtung der Seilscheibe 18 besteht jeweils aus einem Mittelstück und je zwei Aussenprofilen 29, 30, die das Mittelstück 31, 32, 33, 34 zwischen sich einschliessen. Die Aussenprofile 29, 30 sind jeweils durch eine Hälfte einer Halbrundrille gebildet und bei allen in den Figuren 4a bis 4f dargestellten Ausführungen identisch. Das Mittelstück 31 besitzt einen radial nach aussen gekrümmten Verlauf, während das Mittelstück 32 der Doppelrille 20 radial nach innen gekrümmt ist (Figur 4b). Die in Figur 4c abgebildete Doppelrille 21 besitzt ein Mittelstück 33, das eine radial einwärts gebildete Rinne 36 darstellt. In Figur 4d ist die Doppelrille 19 aus Figur 4a ohne darin aufliegendem Zwillingsseil 24 abgebildet. Bei der Doppelrille 22 hat das Mittelstück 34 eine radial nach aussen gerichtete Trapezform. Die beiden halbrundrillenförmigen Aussenteile der Doppelrille 23 verbindet ein flaches ebenes Mittelstück 35 geradlinig miteinander. Alle Doppelrillenausführungsformen 19, 20, 21, 22, 23 sind gemäss der Erfindung im Bereich 37 mittels Plasmabeschichtung mit der erfindungsgemässen Seillaufoberfläche versehen. Diese kann wie bei zuvor beschriebenen Ausführungsbeispielen entweder vollständig oder aber an einer Vielzahl lokal begrenzter Stellen ausgebildet sein.

### Bezugszeichenliste

- 1.: - Seilantrieb
- 2.: - Treibscheibe
- 3.: - Umschlingungswinkel
- 4.: - Kunstfaserseil, mehrlagig
- 5.: - Aufzugskabine
- 6.: - Gegengewicht
- 7.: - Seilrille, grundbeschichtet
- 8.: - Nabe
- 9.: - Durchgangsbohrung
- 10.: - Keilverbindung
- 11.: - Felge, hohlzylinderförmig
- 12.: - Scheibenkörper,gelocht
- 13.: - Drehachse
- 14.: - Plasmabeschichtung
- 15.: -
- 16.: -
- 17.: - Seilrille, flankenbeschichtet
- 18.: - Seilscheibe
- 19.: - Doppelrille
- 20.: - Doppelrille
- 21.: - Doppelrille
- 22.: - Doppelrille
- 23.: - Doppelrille
- 24.: - Zwillingsseil
- 25.: - Kunstfaserseil
- 26.: - Kunstfaserseil
- 27.: - Seilrille,grundbeschichtet
- 28.: - Seilmantel
- 29.: - Aussenteil
- 30.: - Aussenteil
- 31.: - Mittelstück
- 32.: - Mittelstück
- 33.: - Mittelstück
- 34 -: Mittelstück
- 35 -: Mittelstück
- 36 -: Rinne
- 37 -: Plasmabeschichtung

## Patentansprüche

1. Seilantriebselement zum Antreiben von Kunstfaserseilen, vorzugsweise für einen Seilantrieb (1) einer Aufzugsanlage, mit einer um eine Drehachse (13) umlaufenden Seillauffläche in mindestens einer Seilrille (7,17,27,19-23), welche Seilrille (7,17,27,19-23) einen Rillengrund und Rillenflanken aufweist, und mit mindestens einem Kunstfaserseil (4), das zur Übertragung einer Antriebskraft im Kontakt mit der Seillauffläche steht, **dadurch gekennzeichnet, dass** die Seillauffläche bei mindestens einer Seilrille (7,17,27,19-23) eine auf den Rillengrund begrenzte und über einen Winkelbereich von bis zu 45° zu den Rillenflanken reichende, Oberfläche der Rauhigkeitsklasse N7 bis N12 (Mittenrauhwert Ra=1,6 bis 50 µm) aufweist, wobei die Oberfläche einen höheren Systemreibwert als die Rillenflanken aufweist.

2. Seilantriebselement nach Anspruch 1, **dadurch gekennzeichnet, dass** die Oberfläche in Form einer Beschichtung (14,37) ausgebildet ist.

3. Seilantriebselement nach Anspruch 1, **gekennzeichnet durch** mindestens drei in Richtung der Drehachse (13) der Treibscheibe (2,18) hintereinander vorgesehene Seilrillen (7,17,27,19-23) mit unterschiedlich ausgebildeten Beschichtungen (14,37).

4. Seilantriebselement nach Anspruch 2 oder 3, **dadurch gekennzeichnet, dass** die Beschichtung (14,37) einen Mittenrauhwert von Ra=6,3 µm aufweist und mit einer Kunstfaserseilummantelung der Härte A nach Shore kombiniert ist.

5. Seilantriebselement nach Anspruch 2 oder 3, **dadurch gekennzeichnet, dass** die Beschichtung (14,37) einen Mittenrauhwert von Ra=12,5 µm aufweist und mit einer Kunstfaserseilummantelung der Härte D nach Shore kombiniert ist.

6. Verfahren zur Herstellung einer Treibscheibe (2,18) für Fördermaschinen zum Antrieb von Förderseilen aus Kunstfasern, vorzugsweise für einen Seilantrieb (1) einer Aufzugsanlage, bei dem mindestens ein geschlagenes mehrlagiges Kunstfaserlitzenseil (4) eine Seillauffläche der Treibscheibe (2,18) zumindestens teilweise umschlingt und mittels Treibscheibe (2,18) antreibbar ist, die Seillauffläche weist mindestens eine Seilrille (7,17,27,19-23) mit Rillengrund und Rillenflanken auf, **dadurch gekennzeichnet, dass** die Seillauffläche mit einer auf den Rillengrund begrenzten und über einen Winkelbereich von bis zu 45° zu den Rillenflanken reichenden Oberflächenbeschichtung (14,37) der Rauhigkeitsklasse N7 bis N12 (Mittenrauhwert Ra=1,6 bis 50 µm) versehen wird, wobei der Systemreibwert der Oberflächenbeschichtung (14,37) grösser ist als derjenige der unbeschichteten Rillenflanken.

7. Verfahren nach Anspruch 6, **dadurch gekennzeichnet, dass** die Seillauffläche plasmabeschichtet wird.

8. Verfahren nach Anspruch 7, **dadurch gekennzeichnet, dass** als Beschichtungswerkstoff Korund aufgebracht wird.

## Claims

1. Rope drive for driving synthetic-fiber ropes, preferably for a rope drive (1) of an elevator installation, with a rope running surface in at least one rope groove (7,17,27,19-23) running around an axis of rotation (13), the said rope groove (7,17,27,19-23) having a groove floor and groove flanks, and with at least one synthetic-fiber rope (4) that for the purpose of transmitting a driving force is in contact with the rope running surface,
**characterized in that** the rope running surface in at least one rope groove (7,17,27,19-23) has a surface that is limited to the groove floor and extends over an angular range of up to 45° toward the groove flanks with a roughness class of N7 to N12 (roughness average Ra = 1.6 to 50 µm), the surface having a higher system coefficient of friction than the groove flanks.

2. Rope drive according to Claim 1,
**characterized in that** the surface takes the form of a coating (14, 37).

3. Rope drive according to Claim 1,
**characterized by** at least three rope grooves (7,17,27,19-23) provided successively in the direction of the axis of rotation (13) of the traction sheave (2, 18) which have coatings (14, 37) of different forms.

4. Rope drive according to claim 2 or 3,
**characterized in that**
the coating (14, 37) has a roughness average of Ra = 6.3 µm and is combined with a synthetic-fiber rope sheath with Shore hardness A.

5. Rope drive according to claim 2 or 3,
**characterized in that** the coating (14,37) has a roughness average of Ra = 12.5 µm and is combined with a synthetic-fiber rope sheath of Shore hardness D.

6. Method of manufacturing a traction sheave (2, 18) for drive machines for driving hoisting ropes of synthetic-fibers, preferably for a rope drive (1) of an elevator installation, in which at least one laid multi-layer stranded synthetic-fiber rope (4) wraps at least part of a running surface of the traction sheave (2,18) and can be driven by means of a traction sheave (2,18), the rope running surface having at least one rope groove (7,17,27,19-23) with groove floor and groove flanks,
**characterized in that** the rope running surface is provided with a surface coating (14, 37) that is limited to the groove floor and extends over an angular range of up to 45° toward the groove flanks and has a roughness class of N7 to N12 (roughness average Ra = 1.6 to 50 µm), the system coefficient of friction of the surface coating (14,37) being higher than that of the uncoated groove flanks.

7. Method according to Claim 6,
**characterized in that** the rope running surface is plasma coated (14,37).

8. Method according to Claim 7,
**characterized in that** the coating material applied is corundum.

## Revendications

1. Système d'entraînement de câble pour l'entraînement de câbles en fibres synthétiques - de préférence pour un entraînement de câble (1) d'une installation d'ascenseur - avec une surface de roulement du câble et avec au moins un câble en fibres synthétiques (4), la surface de roulement du câble tournant autour d'un axe de rotation (13) dans au moins une gorge de poulie (7, 17, 27, 19-23), cette gorge de poulie (7,17,27,19-23) présentant un fond de gorge et des flancs de gorge et le câble en fibres synthétiques (4) est en contact avec la surface de roulement du câble pour la transmission d'une force d'entraînement, **caractérisé en ce que** la surface de roulement du câble présente - dans le cas d'au moins une gorge de poulie (7, 17, 27, 19-23) - une surface de la classe de rugosité allant de N7 à N12 (indice de rugosité moyenne arithmétique Ra = 1.6 jusqu'à 50 µm) limitée sur le fond de la gorge et tendant vers les flancs de la gorge au-dessus d'un secteur angulaire allant jusqu'à 45°, auquel cas la surface présente une coefficient de friction du système plus élevé que les flancs de la gorge.

2. Système d'entraînement de câble selon la revendication 1, **caractérisé en ce que** la surface est formée sous forme de revêtement (14, 37).

3. Système d'entraînement de câble selon la revendication 1, **caractérisé par** au moins trois gorges de poulie (7, 17, 27, 19-23) prévues l'une derrière l'autre en direction de l'axe de rotation (13) de la poulie motrice (2, 18) avec des revêtements (14, 37) formés différemment.

4. Système d'entraînement de câble selon la revendication 2 ou 3, **caractérisé en ce que** le revêtement (14, 37) présente un indice de rugosité moyenne arithmétique Ra = 6.3 µm et qui est combiné avec un revêtement de câble en fibres synthétiques d'une classe de dureté Shore du type A.

5. Système d'entraînement de câble selon la revendication 2 ou 3, **caractérisé en ce que** le revêtement (14, 37) présente un indice de rugosité moyenne arithmétique Ra = 12.5 µm et qui est combiné avec un revêtement de câble en fibres synthétiques d'une classe de dureté Shore du type D.

6. Procédé pour la fabrication d'une poulie motrice (2, 18) pour des machines de transport pour l'entraînement de câbles tracteurs en fibres synthétiques - de préférence pour un entraînement de câble (1) d'une installation d'ascenseur - lors duquel au moins un câble toronné en fibres synthétiques multicouche et tordu (4) enlace au moins partiellement une surface de roulement du câble de la poulie motrice (2, 18) et est susceptible d'être entraîné à l'aide de la poulie motrice (2, 18), la surface de roulement du câble présente au moins une gorge de poulie (7, 17, 27, 19-23) avec un fond de gorge et des flancs de gorges, **caractérisé en ce que** la surface de roulement du câble est pourvues d'un revêtement de surface (14, 37) de la classe de rugosité allant de N7 jusqu'à N12 (indice de rugosité moyenne arithmétique Ra = 1.6 jusqu'à 50 µm) limitée sur le fond de la gorge et tendant vers les flancs de la gorge au-dessus d'un secteur angulaire allant jusqu'à 45°, auquel cas le coefficient de friction du système du revêtement de surface (14, 37) est plus élevé que celui des flancs de gorge non recouverts.

7. Procédé selon la revendication 6, **caractérisé en ce que** les surfaces de roulement du câble sont recouvertes de plasma.

8. Procédé selon la revendication 7, **caractérisé en ce que** le corindon est fourni comme matériau de revêtement.
